# FASCICULE DE BREVET EUROPEEN

(11) **EP 1 981 324 B1**
(45) Date de publication et mention de la délivrance du brevet: **13.04.2011**
(21) Numéro de dépôt: 08101606.5
(22) Date de dépôt: 13.02.2008
(51) Int. Cl.: H05K 9/00, H04B 1/38

(54) **Pochette anti-radiations.**
Strahlenschutztasche.
Radiation shielding bag.

(30) Priorité: 12.04.2007 FR 0754411
(43) Date de publication de la demande: 15.10.2008
(73) Titulaire: Sor, Lim Meang, 57000 Metz (FR)
(72) Inventeur: Sor, Lim Meang, 57000 Metz (FR)
(74) Mandataire: Casalonga, Axel

(56) Documents cités:
- WO-A-02/05892
- DE-A1- 19 731 904
- US-A1- 2002 175 099
- US-B1- 6 478 205
- US-B1- 6 855 883

## Description

L'invention concerne le domaine des accessoires de transport de petits objets. L'invention concerne en particulier le domaine des pochettes pour objets sensibles aux radiations électromagnétiques ou émettant de telles radiations, tels que des téléphones portables, des cartes de crédit ou des badges d'identification.

Dans ce domaine, on connaît des housses pour téléphones portables destinées à être fixées à la ceinture. L'inconvénient de telles housses est que le téléphone, stocké dans ces housses, continue à émettre des radiations en permanence pour indiquer sa présence à la station de base. Cela engendre des radiations permanentes qui irradient l'utilisateur et notamment qui irradient le même endroit du corps. Si, pour éviter cet inconvénient, l'utilisateur éteint son téléphone portable et qu'il doit téléphoner rapidement, il faut que l'utilisateur procède d'abord à l'allumage du téléphone, à l'introduction d'un éventuel code avant de pouvoir disposer de ce téléphone. Cette opération est longue.

De plus, lorsque l'utilisateur communique avec son téléphone portable, l'appareil émet une quantité importante de radiations en direction de son oreille et de son cerveau.

Par ailleurs, les cartes de crédit sont généralement stockées dans un portefeuille. Or, de nombreux appareils de la vie courante émettent des radiations électromagnétiques tels que des portillons de détection ou d'identification, ou des scanners de contrôle d'accès. Il arrive que des cartes magnétiques soient démagnétisées.

Le document US 6,478,205 décrit une pochette pour objets sensibles aux radiations électromagnétiques et/ou émettant de telles radiations selon le préambule de la revendication 1.

L'invention propose une pochette ainsi qu'une utilisation de cette pochette qui remédient aux problèmes précédents. En particulier, l'invention propose une pochette pour objets sensibles aux radiations électromagnétiques ou pour appareil émettant de telles radiations qui permette dans une première configuration d'utiliser et/ou de porter l'appareil sans être gêné par ces radiations et/ou qui permette de protéger l'objet sensible auxdites radiations, et qui permette dans une deuxième configuration de disposer de l'objet ou de ne pas perturber le fonctionnement de l'appareil tout en protégeant partiellement l'utilisateur.

La présente invention concerne une pochette telle que définie dans la revendication 1.

En d'autres termes, la poche d'isolement présente une ouverture apte à laisser passer l'objet à protéger entre l'extérieure de la poche d'isolement et une zone intérieure à la poche d'isolement. La pochette comprend un moyen de fermeture de la poche d'isolement, apte à isoler electromagnétiquement la zone intérieure par rapport à l'extérieur.

On entend par « pochette » tout dispositif de transport d'objet susceptible de recevoir l'objet et de le protéger notamment des éraflures, durant un transport ou une utilisation.

Une telle pochette permet d'avoir un appareil prêt à fonctionner tout en étant isolé en réception et en émission. C'est le cas par exemple d'un téléphone portable rangé à l'état de veille dans la pochette. On peut utiliser cette pochette pour ranger discrètement et rapidement un téléphone allumé pour que la sonnerie ne se déclenche pas en évitant d'éteindre le téléphone. On peut aussi protéger des objets sensibles aux radiations tels que des cartes magnétiques.

Le moyen de rétention permet de tenir simultanément l'appareil et la pochette. La poche d'isolement peut ainsi servir d'écran entre l'appareil émettant des radiations et le corps de l'utilisateur et ceci sans pour autant empêcher le fonctionnement de l'appareil car celui-ci est maintenu à l'extérieur de la poche d'isolement. Le fait que la pochette soit munie à la fois d'une poche d'isolement et d'un moyen de rétention permet de disposer simultanément des deux avantages de la poche d'isolement et d'un écran, à un coût moindre car la poche d'isolement sert d'écran.

La poche supplémentaire est un moyen de rétention est particulièrement ergonomique.

De plus, selon que l'objet est introduit d'un côté ou de l'autre de la paroi intercalaire, l'objet sera entièrement isolé électromagnétiquement ou bien simplement isolé sur une face.

La doublure et la paroi intercalaire peuvent comporter chacune une ou plus d'une couche dudit tissu. Par exemple, la doublure et la paroi intercalaire peuvent comporter deux couches de tissu de protection électromagnétique. Ces deux couches peuvent être solidarisées dans une même épaisseur tissée ou bien former deux couches superposées. Dans ces deux cas, les fuites électromagnétiques résultant de l'isolation d'une couche de tissu de protection électromagnétique sont occultées par la deuxième couche de tissu de protection électromagnétique. Cela améliore grandement l'efficacité du blindage de la poche d'isolement.

Avantageusement, la deuxième paroi de la poche extérieure est plus courte que la première paroi, et présente une zone de pliage et un rabat destiné à être fixé de façon amovible sur la paroi courte pour fermer la poche extérieure.

Avantageusement, la poche d'isolement s'étend de part et d'autre de la zone de pliage de la poche extérieure et présente une ouverture disposée de manière que le pliage, l'une contre l'autre, des parois en tissu de protection électromagnétique isole électromagnétiquement une zone intérieure de la poche d'isolement. Le rabat permet d'assurer simultanément la fermeture mécanique de la pochette et l'isolement électromagnétique de l'objet placé à l'intérieur.

Selon un mode de réalisation, la doublure de la première paroi comprend un rabat d'isolement destiné à être fixé de façon amovible sur la paroi intercalaire pour fermer la poche d'isolement.

Selon un autre mode de réalisation, la protection électromagnétique s'étend sur la partie rabattue, au-delà de la zone de pliure.

Selon une autre variante, le tissu de protection électromagnétique comprend des fils de trame et des fils de chaîne, une partie des fils de trame et une partie des fils de chaîne étant conducteurs et formant une maille conductrice de dimension sensiblement régulière. Grâce à la maille conductrice sensiblement régulière, la poche d'isolement présente une efficacité de blindage homogène. Les fuites électromagnétiques sont atténuées. Plus la maille conductrice est de dimension réduite, plus l'efficacité de blindage concerne des rayonnements de fréquence élevée.

Avantageusement, au moins un fil conducteur est un fil multibrins comprenant des brins de coton et/ou des brins de lin et/ou des brins métalliques inoxydables. L'enrobage des brins métalliques par des brins de coton ou de lin avec confère à la pochette des propriétés électromagnétiques sans que la pochette soit transformée en râpe risquant d'érafler l'objet stocké.

Avantageusement, au moins un fil conducteur comprend un ruban métallique revêtu au moins en partie de matériau polymère. Un fil en forme de ruban par exemple 0,02 à 0,08 mm d'épaisseur et de 0,20 mm de large confère à la fois une grande souplesse au tissage et des mailles conductrices de dimension réduite. De plus, le revêtement polymère procure au tissage un aspect soyeux agréable au toucher.

Avantageusement, le pas de tissage du tissu de protection électromagnétique est inférieur à 1 mm, de préférence inférieur à 0,3 mm et dans laquelle la maille conductrice est inférieure à 0,3 mm de côté et de préférence inférieure à 0,08 mm de côté. De telles dimensions conviennent en particulier pour les longueurs d'onde utilisées par les téléphones portables.

Selon une variante, la poche d'isolement comprend une feuille de tissu de protection électromagnétique, destinée à être repliée autour du ou des objets à protéger. Les objets à protégés peuvent être des cartes magnétiques et/ou des cartes à puce.

Selon un mode de réalisation, l'assemblage des différents éléments formant la pochette est réalisé avec un fil de couture conducteur.

Selon un autre aspect, l'invention porte sur une utilisation d'une pochette avec un téléphone portable dans laquelle la poche en tissu de protection électromagnétique est au moins en partie intercalée entre l'utilisateur et le téléphone portable. Cette utilisation est particulièrement avantageuse pour protéger un utilisateur de stimulateur cardiaque alors que son téléphone portable est allumé dans une poche intérieure de veston. De plus, cela n'atténue pas la sensibilité de l'utilisateur au vibreur du téléphone. Un autre avantage de cette utilisation est de pouvoir téléphoner longuement sans que le cerveau soit irradié par son téléphone.

D'autres caractéristiques et avantages de l'invention apparaîtront à la lecture de la description détaillée d'un mode de réalisation pris à titre d'exemple non limitatif et illustré par le dessin annexé, selon lequel :
- la figure 1 est une vue de face d'un premier mode de réalisation d'une pochette selon l'invention, à l'état fermé ;
- la figure 2 est une coupe transversale selon le plan II-II de la figure 1 du premier mode de réalisation de la pochette contenant un objet logé dans la poche d'isolement ;
- la figure 3 est une coupe transversale du premier mode de réalisation de la pochette ouverte alors que l'objet est situé à l'extérieur de la poche d'isolement ;
- la figure 4 est un deuxième mode de réalisation de la pochette adapté à des cartes magnétiques.
- la figure 5 est une coupe du tissu de protection électromagnétique, selon le plan V-V de la figure 6 ; et
- la figure 6 est une vue de dessus du tissu de protection électromagnétique.

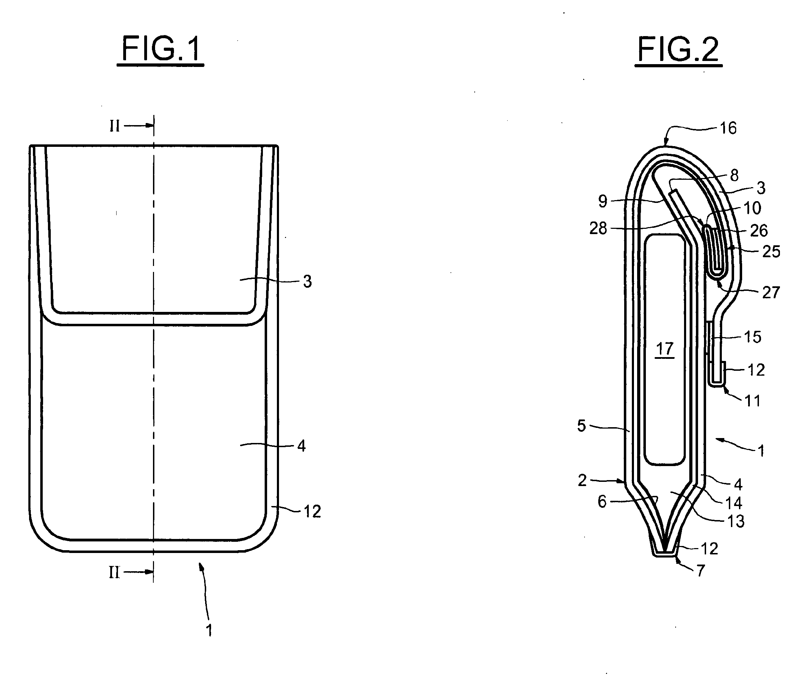

Comme illustré par les figures 1 et 2, la pochette 1 comprend une poche extérieure souple présentant une première paroi 2 contenant un rabat 3 et une deuxième paroi 4 sensiblement parallèle à la première paroi 2 et plus courte que la première paroi 2 et recouverte par le rabat 3.

La première paroi 2 comprend deux épaisseurs, une épaisseur en skaï 5, ou en tout type de matériau souple et sensible transparent aux ondes électromagnétiques, ainsi qu'une doublure 6 composée d'une ou plus d'une couche en tissu de protection électromagnétique, par exemple deux. La doublure 6 et l'épaisseur en skaï 5 s'étendent sur toute la surface de la première paroi 2 y compris le rabat 3. La deuxième paroi 4 comprend par exemple du skaï ou tout type de matériau souple et sensible transparent aux ondes électromagnétiques, tels qu'une toile de drap ou du cuir. La deuxième paroi 4 s'étend depuis un fond 7 de la poche extérieure 1 jusqu'à un premier rebord 8, ainsi que sur toute la largeur de la poche extérieure 1.

Une paroi intercalaire 9, également en tissu de protection électromagnétique, s'étend également sur toute la largeur de la pochette 1 depuis le fond 7 jusqu'à un deuxième rebord 10 situé entre le premier rebord 8 et l'extrémité 11 du rabat 3.

Un liseré 12 borde la poche et permet de solidariser les rebords latéraux et le fond 7 de l'épaisseur 5, de la doublure 6, de la paroi intercalaire 9 et de la deuxième paroi 4 sur toute la longueur de la deuxième paroi 4 s'étendant entre le fond et le premier rebord 8. Le liseré 12 continue de border l'épaisseur 5 et la doublure 6 de la première paroi 2 ainsi que la paroi intercalaire 9 sur toute la longueur s'étendant du premier rebord 8 au deuxième rebord 10. Enfin, le liseré 12 borde le reste de l'épaisseur 5 et de la doublure 6 jusqu'à l'extrémité 11 du rabat 3. Ainsi, grâce au liseré 12, la pochette 1 présente une poche d'isolement 13 ayant comme ouverture le deuxième rebord 10 de la paroi intercalaire 9. Tous ces éléments constituants la pochette sont de préférence assemblés à l'aide d'un fil de couture conducteur permettant de réduire les fuites électromagnétiques qui pourraient être créées par les trous de couture dans le cas d'un fil de couture en tissu non conducteur.

Une poche supplémentaire 14 est constituée par la paroi intercalaire 9 d'un côté et par la deuxième paroi 4 de l'autre et présente comme ouverture, le premier rebord 8 de la deuxième paroi 4.

La première paroi 2 présente une zone de pliage 16 située entre le premier rebord 8 et le deuxième rebord 10. Le rabat 3 est rabattu sur une face extérieure de la deuxième paroi 4. Une bande d'accrochage à bouclette 15 présente deux parties complémentaires en regard, l'une à proximité de l'extrémité 11 du rabat 3, et l'autre sur la face extérieure de la deuxième paroi 4.

L'objet 17, représenté en figure 2, est introduit dans la poche d'isolement 13. La zone de pliage 16 permet d'assurer le contact entre la paroi intercalaire 9 et la doublure 6 de sorte que l'objet 17 est isolé électromagnétiquement.

La doublure 6 de la première paroi 2 comporte un rabat d'isolement 25 destiné à être fixé de façon amovible, à l'aide par exemple d'une bande d'accrochage à bouclette 26, sur la paroi intercalaire 9 pour fermer la poche d'isolement 13. Une manière de fermer la poche d'isolement 13 est de replier la partie de la doublure 6 dépassant par rapport à la paroi intercalaire 9, sur cette paroi intercalaire 9 suivant la zone de pliage 28, et de replier à nouveau le tout suivant la zone de pliage 27 pour que la partie de fixation amovible vienne se fixer sur la paroi intercalaire 9.

La surépaisseur créée par le pliage de la doublure et de la paroi intercalaire permet de ne pas blesser les fibres conductrices du tissu de protection électromagnétique lors du pliage du rabat 3 sur la deuxième paroi 4 pour fermer la pochette, tout en maintenant l'isolement électromagnétique de la zone intérieure de la poche d'isolement 13.

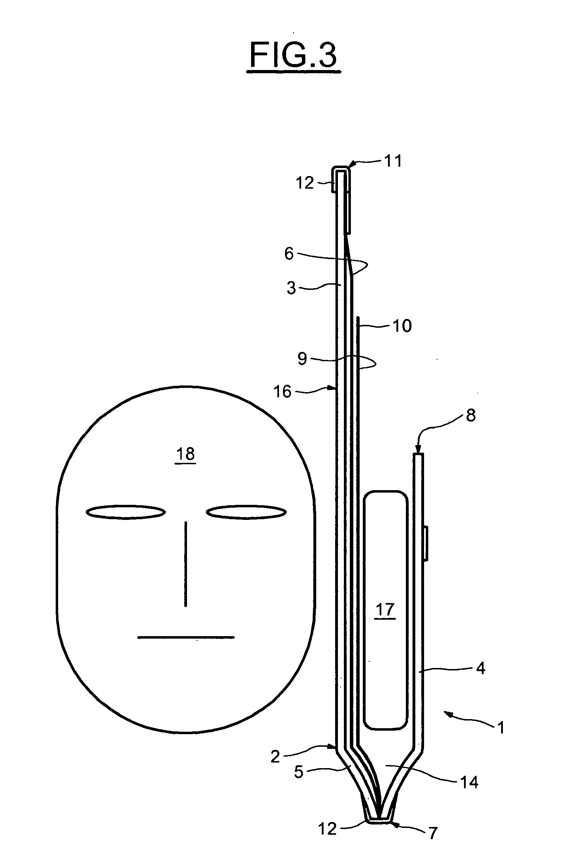

On va à l'aide de la figure 3 décrire une autre utilisation de la pochette 1 précédemment décrite. Dans cette utilisation, l'objet 17 est placé à l'intérieur de la poche supplémentaire 14 et comprend d'un côté la poche d'isolement 13 qui peut servir d'écran par rapport au corps de l'utilisateur et en particulier de son visage 18. La deuxième paroi 4 de la poche supplémentaire 14 comprend du skaï et laisse passer les ondes électromagnétiques. Dans cette position, l'objet 17 tel qu'un téléphone portable peut ainsi recevoir et émettre un signal électromagnétique. Cet avantage est obtenu que le rabat 3 soit en position ouverte ou fermée.

Dans une autre variante, une bande d'accrochage à bouclette supplémentaire peut être introduite à proximité du deuxième rebord 10 entre la paroi intercalaire 9 et la doublure 6. Toutefois, cette bande d'accrochage supplémentaire ne doit pas gêner le contact entre les deux parois en tissu de protection électromagnétique dans la zone de pliage 16.

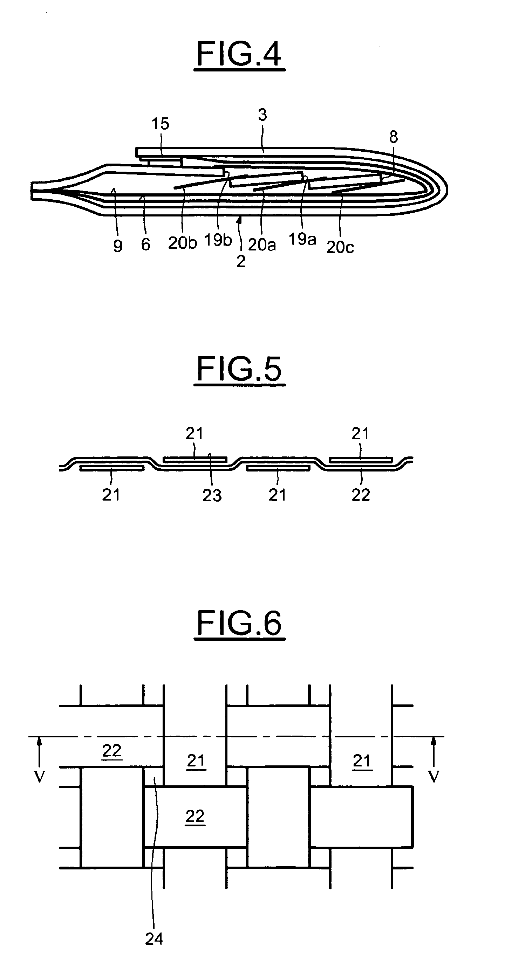

Le mode de réalisation illustré à la figure 4 diffère du mode de réalisation précédemment décrit par le fait que la deuxième paroi 4 présente, en plus du premier rebord 8, des ouvertures 19a et 19b permettant d'introduire des cartes de visite 20a, 20b, 20c, le rabat 3 étant suffisamment long pour recouvrir complètement les ouvertures 19a et 19b. Ainsi, lorsque le rabat 3 est fermé, un premier niveau de protection est assuré par la doublure 6 de la première paroi 2 qui entoure les cartes magnétiques. Ce premier niveau de protection laisse toutefois libre la poche d'isolement 13 pour par exemple un téléphone portable.

Pour une protection plus complète des cartes magnétiques, celles-ci peuvent être introduites à l'intérieur de la poche d'isolement 13.

Dans une variante, non illustrée, la pochette a une forme de porte carte de type portefeuille. La pochette comporte deux cotés, de tailles sensiblement égales, et se repliant autour d'une zone médiane. Au moins un des cotés présente une pluralité d'ouvertures destinées à recevoir des cartes, par exemple au format carte de crédit. Ces cartes peuvent être par exemple, des cartes magnétiques ou des cartes à puce. Il est possible que la pochette comprenne des intercalaires, rattachés à la zone médiane, et dont certain peuvent recevoir aussi des cartes.

La pochette comprend une feuille en tissu de protection électromagnétique s'étendant le long de chacun des deux cotés du porte carte et de la zone médiane, de manière qu'en refermant le porte carte, la feuille en tissu de protection électromagnétique soit repliée et forme une poche d'isolement autour des cartes rangées dans le porte carte.

Pour améliorer l'isolement électromagnétique autour des cartes, un moyen de fermeture de la poche d'isolement peut comprendre des bourrelets, recouverts de tissu de protection électromagnétique, et destinés à être en contact les uns contre les autres lorsqu'on referme le porte carte.

On va à l'aide des figures 5 et 6 décrire un mode de réalisation possible du tissu de protection électromagnétique. Celui-ci peut être constitué de rubans de chaînes 21 et de rubans de trame 22, identiques, de section droite rectangulaire, et ayant une épaisseur comprise entre 20 et 80 micromètres et de préférence environ 40 micromètres, et ayant une largeur de 0,1 à 0,3 mm et de préférence environ 0,20 mm.

Les rubans 21, 22 sont en laiton et sont entourés sur toute leur surface extérieure d'un flash polymère 23, par exemple du PET. L'âme du fil de chaîne peut être également du cuivre avec un revêtement de nickel permettant au revêtement plastique 23 d'adhérer. Un tel tissage présente l'avantage de fils métalliques relativement résistants en raison de leur largeur et d'un tissu suffisamment souple en raison de la faible épaisseur des fils. L'espace libre entre les rubans 21 et les rubans 22 forme une maille conductrice 24 dont la dimension est directement liée à l'épaisseur des rubans. Celle-ci est de quelques dizaines de microns de côté. De plus, le contact électrique entre les rubans de trame 22 et les rubans de chaîne 21 est assuré par les rebords relativement vifs des rubans qui pincent le revêtement polymère 23 dans la zone d'entrecroisement des rubans. Enfin, le revêtement polymère 23 confère un aspect soyeux au toucher et permet au tissage d'être cousu dans des machines traditionnelles de couture. Un tel tissage peut satisfaire facilement aux spécifications de sécurité et de toxicité sur les tissus, en particulier il ne contient sensiblement pas de cadmium ni de plomb ni de mercure, de plus la résistance mécanique de la pochette est conservée même en cas de brûlure locale. Un tel tissu de protection électromagnétique facilite la réalisation de la pochette 1. Un effet surprenant de ce tissu est d'être à la fois souple et agréable au toucher tout en permettant de protéger électromagnétiquement un objet.

## Revendications

1. Pochette (1) pour objets sensibles aux radiations électromagnétiques et/ou émettant de telles radiations (17, 20a) comprenant au moins une poche d'isolement (13) en tissu de protection électromagnétique, destinée à recevoir l'objet (17, 20a) et apte à être fermée autour de l'objet (17, 20a), un moyen de rétention de l'objet sur un côté extérieur de la poche d'isolement (13) sous la forme d'une poche supplémentaire (14) munie d'au moins une paroi (4) laissant passer les ondes électromagnétiques, une poche extérieure souple présentant une première et une deuxième parois (2,4), la première paroi (2) comprenant une doublure (6) en tissu de protection électromagnétique, **caractérisée en ce qu'**une paroi intercalaire (9) en tissu de protection électromagnétique s'étend entre les deux parois (2,4) de la poche extérieure, la poche d'isolement (13) étant constituée au moins en partie par la doublure (6) et par la paroi intercalaire (9), la doublure et la paroi intercalaire comportant chacune une ou plus d'une couche dudit tissu, et la poche supplémentaire (14) étant constituée au moins en partie par la paroi intercalaire (9) et par la deuxième paroi (4) de la poche extérieure.

2. Pochette selon la revendication 1, dans laquelle la deuxième paroi (4) de la poche extérieure est plus courte que la première paroi (2), la première paroi (2) présentant une zone de pliage (16) et un rabat (3) destiné à être fixé de façon amovible sur la paroi courte (4) pour fermer la poche extérieure.

3. Pochette selon la revendication 2, dans laquelle la poche d'isolement (13) s'étend de part et d'autre de la zone de pliage (16) de la poche extérieure et présente une ouverture (10) disposée de manière que le pliage, l'une contre l'autre, des parois (6, 9) en tissu de protection électromagnétique isole électromagnétiquement une zone intérieure de la poche d'isolement (13).

4. Pochette selon la revendication 3, dans laquelle la doublure de la première paroi (2) comprend un rabat d'isolement (25) destiné à être fixé de façon amovible sur la paroi intercalaire (9) pour fermer la poche d'isolement (13).

5. Pochette selon l'une quelconque des revendications 1 à 4, comprenant un rabat (3) **caractérisé par le fait que** la protection électromagnétique s'étend sur la partie rabattue, au-delà de la zone de pliure.

6. Pochette selon l'une quelconque des revendications 1 à 5, dans laquelle le tissu de protection électromagnétique comprend des fils de trame (22) et des fils de chaîne (21), une partie des fils de trame (22) et une partie des fils de chaîne (21) étant conducteurs et formant une maille conductrice (24) de dimension sensiblement régulière.

7. Pochette selon la revendication 6, dans laquelle au moins un fil conducteur est un fil multibrins comprenant des brins de coton et/ou des brins de lin et/ou des brins métalliques inoxydables.

8. Pochette selon la revendication 6 ou 7, dans laquelle au moins un fil conducteur comprend un ruban métallique (21, 22) revêtu au moins en partie de matériau polymère (23).

9. Pochette selon l'une quelconque des revendications 1 à 8, dans laquelle l'assemblage des différents éléments formant la pochette est réalisé avec un fil de couture conducteur.

## Claims

1. Pouch (1) for objects sensitive to electromagnetic radiation and/or emitting such radiation (17, 20a) comprising at least one isolation pocket (13) made of electromagnetic protective fabric, designed to receive the object (17, 20a) and capable of being closed around the object (17, 20a), a means for retaining the object on one outer side of the isolation pocket (13) in the form of an additional pocket (14) furnished with at least one wall (4) allowing the electromagnetic waves to pass through, a flexible outer pocket having a first and a second wall (2, 4), the first wall (2) comprising a lining (6) made of electromagnetic protective fabric, **characterized in that** an intermediate wall (9) made of electromagnetic protection fabric extends between the two walls (2, 4) of the outer pocket, the isolation pocket (13) consisting at least in part of the lining (6) and of the intermediate wall (9), the lining and the intermediate wall each comprising one or more than one layer of said fabric, and the additional pocket (14) consisting at least in part of the intermediate wall (9) and of the second wall (4) of the outer pocket.

2. Pouch according to Claim 1, wherein the second wall (4) of the outer pocket is shorter than the first wall (2), the first wall (2) having a folding zone (16) and a flap (3) designed to be removably attached to the short wall (4) in order to close the outer pocket.

3. Pouch according to Claim 2, wherein the isolation pocket (13) extends on either side of the folding zone (16) of the outer pocket and has an opening (10) placed such that the folding, one against the other, of the walls (6, 9) made of electromagnetic protective fabric electromagnetically isolates an internal zone of the isolation pocket (13).

4. Pouch according to Claim 3, wherein the lining of the first wall (2) comprises an isolation flap (25) designed to be removably attached to the intermediate wall (9) in order to close the isolation pocket (13).

5. Pouch according to any one of Claims 1 to 4, comprising a flap (3), **characterized in that** the electromagnetic protection extends over the folded-down portion, beyond the folding zone.

6. Pouch according to any one of Claims 1 to 5, wherein the electromagnetic protective fabric comprises weft threads (22) and warp threads (21), a portion of the weft threads (22) and a portion of the warp threads (21) being conductive and forming a conductive mesh (24) of substantially even dimension.

7. Pouch according to Claim 6, wherein at least one conductive thread is a multi-strand thread comprising cotton strands and/or linen strands and/or stainless metal strands.

8. Pouch according to Claim 6 or 7, wherein at least one conductive thread comprises a metal strip (21, 22) at least partly made of polymer material (23).

9. Pouch according to any one of Claims 1 to 8, wherein the various elements forming the pouch are assembled with a conductive stitching thread.

## Patentansprüche

1. Hülle (1) für Gegenstände, die für elektromagnetische Strahlungen empfindlich sind und/oder solche Strahlungen emittieren (17, 20a), mit mindestens eine Isoliertasche (13) aus einem Schutzstoff gegen elektromagnetische Strahlen, die dazu bestimmt ist, den Gegenstand (17, 20a) aufzunehmen, und die um den Gegenstand (17, 20a) herum verschlossen werden kann, mit einer Einrichtung für den Rückhalt des Gegenstands an einer Außenseite der Isoliertasche (13) in Form einer zusätzlichen Tasche (14), die mit mindestens einer Wand (4) versehen ist, die die elektromagnetischen Wellen durchlässt, einer äußeren elastischen Tasche, die eine erste und eine zweite Wand (2, 4) aufweist, wobei die erste Wand (2) ein Futter (6) aus Schutzstoff gegen elektromagnetische Strahlen enthält, **dadurch gekennzeichnet, dass** eine Zwischenwand (9) aus Schutzstoff gegen elektromagnetische Strahlen sich zwischen den zwei Wänden (2, 4) der äußeren Tasche erstreckt, wobei die Isoliertasche (13) zumindest zum Teil aus dem Futter (6) und der Zwischenwand (9) besteht, wobei das Futter und die Zwischenwand je eine oder mehr als eine Schicht des Stoffs aufweisen, und die zusätzliche Tasche (14) zumindest zum Teil aus der Zwischenwand (9) und aus der zweiten Wand (4) der äußeren Tasche besteht.

2. Hülle nach Anspruch 1, bei der die zweite Wand (4) der äußeren Tasche kürzer ist als die erste Wand (2), wobei die erste Wand (2) eine Umbiegezone (16) und eine Lasche (3) aufweist, die dazu bestimmt ist, lösbar an der kurzen Wand (4) befestigt zu werden, um die äußere Tasche zu verschließen.

3. Hülle nach Anspruch 2, bei der die Isoliertasche (13) sich zu beiden Seiten der Umbiegezone (16) der äußeren Tasche erstreckt und eine Öffnung (10) aufweist, die so angeordnet ist, dass die Umbiegung der Wände (6, 9) aus Schutzstoff gegen elektromagnetische Strahlen gegeneinander eine Innenzone der Isoliertasche (13) elektromagnetisch isoliert.

4. Hülle nach Anspruch 3, bei der das Futter der ersten Wand (2) eine Isolierlasche (25) enthält, die dazu bestimmt ist, lösbar an der Zwischenwand (9) befestigt zu werden, um die Isoliertasche (13) zu verschließen.

5. Hülle nach einem der Ansprüche 1 bis 4, die eine Lasche (3) enthält, **dadurch gekennzeichnet, dass** der elektromagnetische Schutz sich auf den umgeklappten Teil jenseits der Umbiegezone erstreckt.

6. Hülle nach einem der Ansprüche 1 bis 5, bei der der elektromagnetische Schutzstoff Schussfäden (22) und Kettfäden (21) enthält, wobei ein Teil der Schussfäden (22) und ein Teil der Kettfäden (21) leitend sind und eine leitende Masche (24) vom im Wesentlichen regelmäßiger Abmessung bilden.

7. Hülle nach Anspruch 6, bei der mindestens ein leitender Faden ein Multifilamentfaden ist, der Baumwoll- und/oder Leinen- und/oder rostfreie Metallfilamente enthält.

8. Hülle nach Anspruch 6 oder 7, bei der mindestens ein leitender Faden ein Metallband (21, 22) enthält, das zumindest zum Teil mit Polymermaterial (23) umhüllt ist.

9. Hülle nach einem der Ansprüche 1 bis 8, bei der der Zusammenbau der verschiedenen die Hülle bildenden Elemente mit einem leitenden Nähfaden durchgeführt wird.
